# EUROPEAN PATENT APPLICATION

(11) **EP 4 818 942 A1**
(43) Date of publication of application: **07.10.2026**
(21) Application number: 26169752.8
(22) Date of filing: 31.03.2026
(51) Int. Cl.: G06F 21/53, G06F 21/55, G06F 21/56, H04L 9/40, G06F 9/455

(54) **CYBER DECEPTION ORCHESTRATION FRAMEWORK FOR KUBERNETES**

(30) Priority: 02.04.2025 US 202563782274 P; 25.03.2026 US 202619578164
(71) Applicant: Dynatrace LLC, Boston, Massachusetts 02210 (US)
(72) Inventor: KAHLHOFER, Mario, 4020 Linz (AT)
(74) Representative: Steffens, Adrian

(57) **Abstract**

A computer-implemented method is presented for implementing cyber deception in a container orchestration system. As a starting point, a deception manager is installed on a cluster of a container orchestration system. The method includes: receiving a deception policy, where the deception policy identifies at least one trap, specifies a match rule for HTTP requests, specifies a response rule for responding to matched HTTP requests, specifies criteria for where to deploy traps, and specifies criteria for how to deploy the traps; and creating a set of traffic routing rules for a service mesh in the cluster, where the set of traffic routing rules implements the traps and is created according to the criteria for how to deploy the traps as defined in the deception policy.

## Description

### Field

The present disclosure relates to cyber deception in a container orchestration system.

### Background

The interest in cyber deception technology, which includes methods that set subtle traps to easily spot, delay, and deter attackers, has recently gained renewed attention. The emergence of generative honeypots now allows the rapid generation of enticing deceptive payloads. Simultaneously, modern software application architectures, particularly cloud native architectures, have become increasingly dynamic and flexible, offering novel opportunities to integrate active defensive measures. Leveraging these opportunities can accelerate the adoption of cyber deception technology by the industry, as they can address two common, yet unexplored, needs of system operators.

First - how can cyber deception techniques be formalized "as code", i.e., expressed as structured documents? Second - how can one implement these policies in real-world software systems, without the ability to own or alter the application's source code, which is a common constraint faced by system operators?

This section provides background information related to the present disclosure which is not necessarily prior art.

### Summary

This section provides a general summary of the disclosure, and is not a comprehensive disclosure of its full scope or all of its features.

In one aspect, a computer-implemented method is presented for implementing cyber deception in a container orchestration system. As a starting point, a deception manager is installed on a cluster of a container orchestration system. The method includes: receiving a deception policy, where the deception policy identifies at least one trap, specifies a match rule for HTTP requests, specifies a response rule for responding to matched HTTP requests, specifies criteria for where to deploy traps, and specifies criteria for how to deploy the traps; and creating a set of traffic routing rules for a service mesh in the cluster, where the set of traffic routing rules implements the traps and is created according to the criteria for how to deploy the traps as defined in the deception policy.

In another aspect, a data processing system comprises means for carrying out said method. In particular, the data processing system may comprise at least one processor configured to perform the steps of said method. The data processing may comprise the cluster of a container orchestration system.

The match rule may take different forms. For example, the match rule in the deception policy may specify a particular endpoint defined in accordance with Hypertext Transfer Protocol (HTTP). In another example, the match rule in the deception policy specifies a pattern for selecting one or more HTTP requests.

The response rule in the deception policy defines how to provide HTTP responses for HTTP requests and is applied in response to a HTTP request matching the match rule. Similar to the match rule, the response rule may take different forms. In one example, the response rule specifies static content. In another example, the response rule defines a response match rule for HTTP responses and a response header manipulation rule specifies how to change header of a given HTTP response, where the given HTTP response matches the response match rule. In yet another example, the response rule defines a response match rule for HTTP responses and a response content manipulation rule specifies how to change content of a given HTTP response, where the given HTTP response matches the response match rule.

In an example embodiment, the container orchestration system is further defined as Kubernetes container orchestration system and the deception manager is defined as an operator for control plane of the Kubernetes container orchestration system. The criteria for where to deploy the traps may include but is not limited to at least one of resource type, resource name, resource namespaces, resource labels, resource annotations, container names, and container ports. The criteria for where to deploy the at least one trap may identify a first set of application services.

In some embodiments, the deception policy further defines criteria for how to deploy a monitor for a trap and the deception manager creates a second set of traffic routing rules for the service mesh in the cluster, where the second set of traffic routing rules implements the monitor. The monitor may be further defined as a filter having a match rule for HTTP requests and a notifier that sends a notification regarding the trap to the deception manager in response to a given HTTP request matching the match rule.

In response to receiving a request from a component that is part of the service mesh regarding a given trap, the deception manager extracts metadata about the given trap from the request and logs the metadata in a data store. Alternatively or additionally, in response to receiving a request from the service mesh regarding the given trap, the deception manager reads a log maintained by the service mesh (or other cluster components) and logs an event accessing the given trap in a data store.

In another example, a non-transitory computer-readable medium has computer-executable instructions that, upon execution of the instructions by a processor of a computer, cause the computer to: receive a deception policy by a deception manager installed on a cluster of a container orchestration system, where the deception policy identifies at least one trap, specifies a match rule for HTTP requests, specifies a response rule for responding to matched HTTP requests, specifies criteria for where to deploy the at least one trap, and specifies criteria for how to deploy the at least one trap; create a set of traffic routing rules for a service mesh in the cluster, where the set of traffic routing rules implements the at least one trap and is created according to the criteria for how to deploy the at least one trap defined in the deception policy; and create a second set of traffic routing rules for the service mesh in the cluster, where the second set of traffic routing rules implements a monitor for the at least one trap and the deception policy further defines criteria for how to deploy the monitor.

The match rule in the deception policy may specify a particular endpoint defined in accordance with Hypertext Transfer Protocol (HTTP). The match rules in the deception policy may specify a pattern for selecting one or more HTTP requests. The response rule in the deception policy may define how to provide HTTP responses for HTTP requests and is applied in response to a HTTP request matching the match rule. The response rule may specify static content. The response rule may define a response match rule for HTTP responses and a response header manipulation rule specifies how to change header of a given HTTP response, where the given HTTP response matches the response match rule. The response rule may define a response match rule for HTTP responses and a response content manipulation rule specifies how to change content of a given HTTP response, where the given HTTP response matches the response match rule.

The embodiments described above in connection with the method for implementing cyber deception in a container orchestration system may be provided correspondingly for the data processing system and/or the non-transitory computer-readable medium.

Further areas of applicability will become apparent from the description provided herein. The description and specific examples in this summary are intended for purposes of illustration only and are not intended to limit the scope of the present disclosure.

### Brief description of the drawings

The drawings described herein are for illustrative purposes only of selected embodiments and not all possible implementations, and are not intended to limit the scope of the present disclosure.
- Fig. 1: is a diagram showing the primary components of a Kubernetes container orchestration system.
- Fig. 2: is a flowchart showing how to configure a deception manager in a container orchestration system.
- Fig. 3: is a flowchart depicting a technique for implementing cyber deception in a container orchestration system.
- Fig. 4: is a diagram showing deployment strategies for placing honeytokens.
- Fig. 5: is a diagram showing deployment strategies for placing HTTP-based traps.
- Fig. 6: is a flowchart depicting an example embodiment for deploying traps.
- Fig. 7: is diagram showing additional details of the structure of deployment entities, like Kubernetes pods into which deception mechanisms are injected that are based on service mesh functionality.

Corresponding reference numerals indicate corresponding parts throughout the several views of the drawings.

### Detailed description

Example embodiments will now be described more fully with reference to the accompanying drawings.

Container orchestration systems are prevalent in modern computing. For example, Kubernetes is one of the most popular systems for deploying and managing cloud applications at scale. Kubernetes leverages containers to deploy and manage applications. While specific reference is made throughout this disclosure to Kubernetes, it is readily understood that the techniques described herein are applicable to other types and variants of container orchestration systems, like Docker Swarm, HashiCorp Nomad or RedHat's OpenShift.

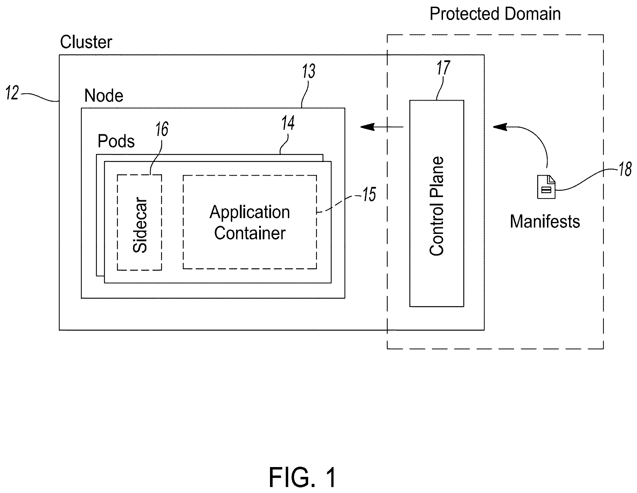

Figure 1 illustrates the primary components of a Kubernetes cluster 12. A pod 14 is the smallest deployable unit and contains the software application 15. A pod consists of at least one container, and containers within the same pod share storage and network resources. Containers used for auxiliary tasks such as monitoring, logging, security, or provisioning of service mesh functionality are known as sidecar containers 16. For the service mesh use case, each sidecar container intercepts all inbound and outbound network traffic for its co-located application container, enabling centralized traffic management without application modification. A proxy component executing in a sidecar container that is injected into an application pod is a known implementation pattern used to realize service mesh functionality.

Pods 14 are deployed on a node 13, which can be a physical or virtual machine. A cluster 12 is composed of one or more nodes 13. Clusters 12 have at least one control plane 17, which offers APIs to system operators and computer systems to manage cluster configuration and workloads. The control plane 17 is typically isolated from the (application) workloads and cannot be easily compromised. Workloads, such as pods, are represented by manifests 18, which are formal documents that describe them. Manifests 18 hold metadata, such as the resource name, resource kind (indicating their type), their associated namespace (to organize resources), labels and annotations (custom key-value pairs), and their kind-specific properties. For pods, these include container images, command-line arguments, environment variables, mounted volumes, exposed ports, and more.

Kubernetes can be extended with operators, which add custom logic to the Kubernetes API, to facilitate the management of complex applications and clusters. Operators typically install custom resource definitions (CRDs), which represent new kinds of resources with which system operators can interface. Custom resources, and more generally all resource definitions in Kubernetes, describe a desired state. Operators watch for changes to their custom resources (and possibly to the cluster state) and take action to restore and maintain the desired cluster state. The process of restoring the state of the cluster to the desired one is called reconciliation and is executed in a loop by the operator, triggered by the control plane.

Introducing cyber deception policies enables dividing responsibilities between three roles, which typically do not overlap: authors of cyber deception techniques, software application developers, and system operators deploying them. A deception policy is a custom resource definition registered with the cluster's control plane. This pattern is especially prevalent in Kubernetes and is followed by popular tools to manage Kubernetes configuration elements, including security policies. Kyverno is an open-source initiative that defines a structure for such configuration elements and policies and that provides tools for automated security and compliance checks of such policies. The proposed structure of deception policy documents is aligned to those Kyverno standards. Listing 1 below presents the design of a policy document and its structure in pseudo-code.

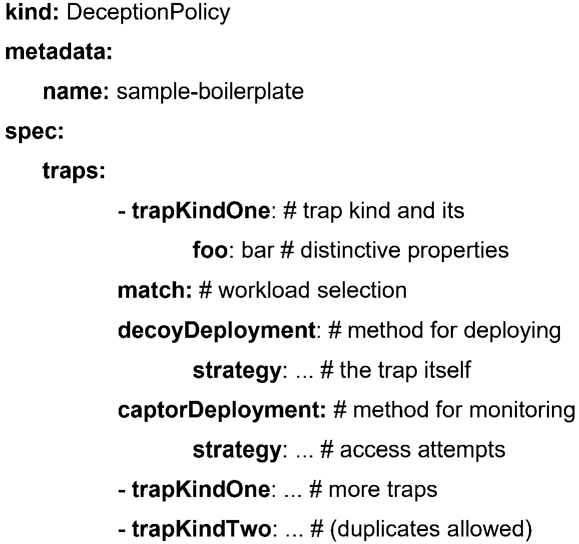

A deception policy defines one or more traps and their parameters. A trap consists of a decoy, which is the entity that is attacked, and a captor or monitor, which monitors the decoy. Parameters for a trap will differ depending on the type of trap. In general, the deception policy specifies criteria for where to deploy a trap and specifies criteria for how to deploy the trap. The deception policy may also define criteria for monitoring the trap.

Traps in file systems are an example for one type of trap. For example, the deployment of a honeytoken in a file system can be formally described by its path and content. To closely resemble real security tokens, one may set the file's access mode to readOnly. If the file content is longer than a few lines or is binary, the deception policy must include a URL pointing to the source of the honeyfile to be downloaded before deployment. An example of both types of traps is illustrated in Listing 2 below.

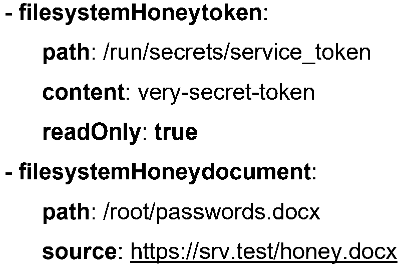

These two specifications can also be nested to facilitate the creation of entire honeydirectories.

Traps in web applications are another example. In one example, the web application may communicate in accordance with Hypertext Transfer Protocol (HTTP). In this example, the parameters for the trap include a match rule that specifies HTTP requests, and a response rule that specifies how to respond to matched HTTP requests. The match rules may take different forms. In one embodiment, the match rule for a trap specifies a path for a particular endpoint defined in accordance with Hypertext Transfer Protocol (HTTP). In another embodiment, the match rule defines a pattern for selecting one or more HTTP request, for example by using regular expression to specify HTTP requests by path and method.

Similarly, the response rule may take different forms. In one embodiment, the response rule sets forth static content for the HTTP response as seen in Listing 3 below, including response status, headers, and body

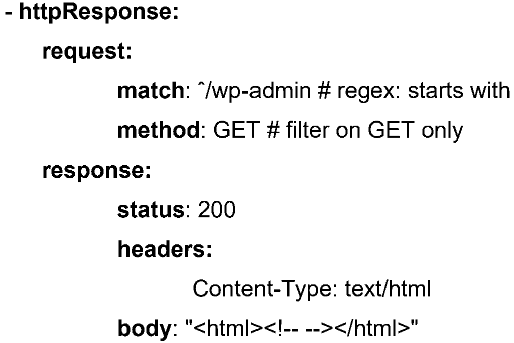

In another embodiment, the response rule defines a response header manipulation rule which is applied to a HTTP response header created by a web application receiving the matched HTTP request. To modify or add headers and change the status code of genuine HTTP responses, the response specification is altered to include a status and a setHeader directive as shown in Listing 4 below. The removeHeaders directive enables removing response headers from HTTP responses.

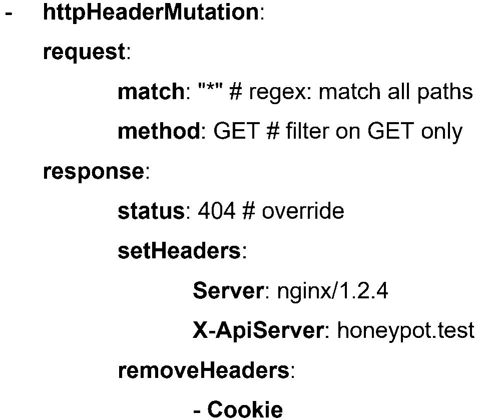

In yet another embodiment, the response rule defines a response content manipulation rule. The response content manipulation rule is applied to a HTTP response body created by a web application receiving the matched HTTP request Additionally, a response match rule can be provided, which further specifies what responses shall be manipulated. In Listing 5 below, the response match rule filters responses to have the header "Content-Type" of value "text/html", so that only HTML-formatted responses are manipulated, and not, e.g., images.

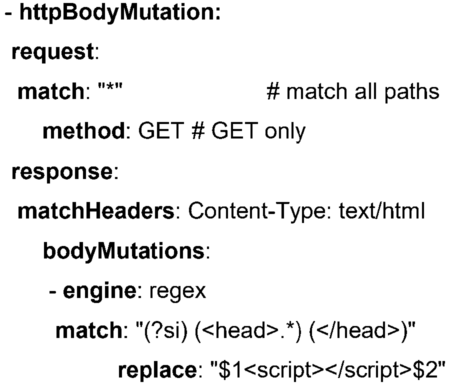

Every trap also needs to specify the resources it targets, i.e., criteria for where to deploy the trap. This disclosure uses labels and selectors, which is a standard method of organizing and selecting resources in Kubernetes. For example, the *match* field is used to select the Kubernetes resources where to deploy the trap. It contains the *any* field, which includes resource filters that will be matched with a logical OR operation. The *any* field is a list and holds one or more resources objects, which contain the following filters (both *namespaces* and *selector* are optional, but at least one of the two must be present). Alternatively, the selection criteria could use an *all* field to specify conjunction of specified filters (both *namespace* and *selector* need to be present and match). In the context of Kubernetes, example resources include but are not limited to resource type, resource name, resource namespaces, resource labels, resource annotations, container names, and container ports.

namespaces: a list of namespaces. It does not support wildcards. The trap is only deployed in pods that belong to any of the namespaces in the list.

selector: a label selector. It does not support wildcards. The trap is only deployed in pods with labels that match the selector. If you specify multiple labels or expressions, all of them have to match for traps to be deployed. *Selector* has two fields: *matchLabels:* a map of key-value pairs; and *matchExpressions*: a list of label selector requirements evaluated as a logical AND operation.

containerSelector: selects the container(s) in the matched pods or deployments where the trap is deployed. If this field is prepended by *regex*:, the rest of the string will represent a regular expression matched with go regexp library. If the field is prepended by *glob*:, then this is a glob pattern, as described in go filepath.Match library. If it is empty, the trap is deployed in all containers in the matched pods. Otherwise, the name of the container will be compared exactly. The default value is empty.

One of selector or namespaces (or both) must be specified to make a valid filter. Multiple selectors within one filter are evaluated with a logical AND. For example, the following *match* field selects all pods in the *koney* namespace, and all pods with the label *"demo.koney*/*honeytoken:"* set to the value *"true",* which also match the regular expression specified by the *"containerSelector" (which, here, is a wildcard "*" selecting all containers):*

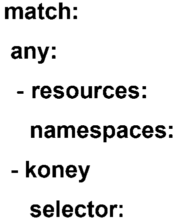

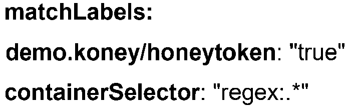

In an example embodiment, Kyverno's syntax is adopted because one finds it well-organized and easy to use. Moreover, since Kyverno is a popular tool, many users might already be familiar with its syntax. Other types of syntaxes are contemplated by this disclosure.

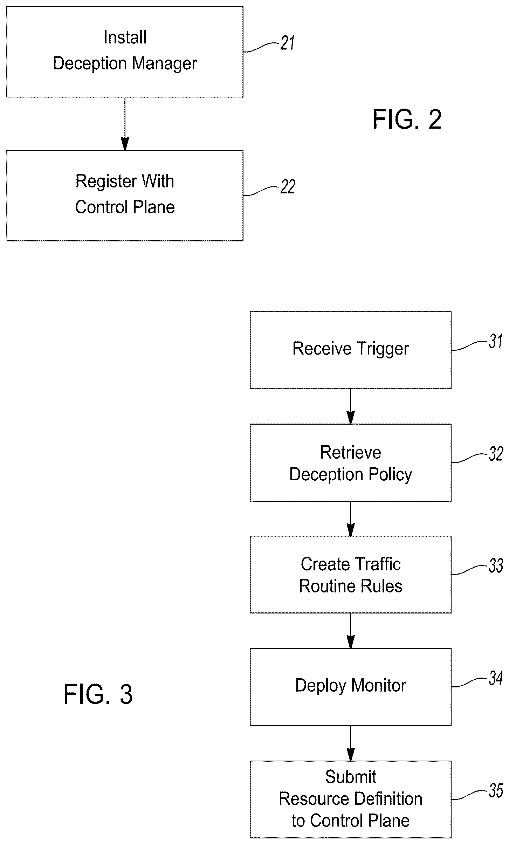

A deception manager is used to automate the deployment and monitoring of traps in Kubernetes clusters. In the example embodiment, the deception manager is implemented as an operator for the control plane of the Kubernetes. For example, the deception manager may be built using the Operator SDK, a framework for developing Kubernetes operators with Golang. To configure the container orchestration system, the deception manager is first installed on a cluster of the container orchestration system at 21 and then the deception manager registers with the control plane of the container orchestration system at 22 as shown in Figure 2. This registration causes the control plane to notify the deception manager of selected control plane changes (i.e., receipt of new/updated deception policy documents, creation/update/deletion of services, pods, workloads and the like), which may trigger the creation and deployment of control plane updates that cause the implementation of deception mechanisms. Such updates may include the creation of proxy filter configurations, like VirtualService or EnvoyFilter specifications.

Figure 3 illustrates a technique for implementing cyber deception by the deception manager in a container orchestration system, such as Kubernetes. During operation, the deception manager implements a reconciliation loop, which is a design pattern in which the deception manager repeatedly compares the desired state (expressed in the deception policy) against the actual state of the cluster, and takes corrective actions to converge the two. The reconciliation loop is triggered at 31 by changes to the deception policy itself (i.e., creation, modification or deletion) or application workloads (i.e., creation or modification of processes, containers, pods, services ...) as detected by the control place of the container orchestration system.

On each reconciliation invocation, the deception manager performs the following steps in sequence. First, the deception manager fetches the current version of the deception policy from the cluster API as indicated at 32. If a system administrator would delete a policy, it is actually only "marked for deletion", so that deception manager can still fetch it, see that it is marked for deletion, and perform potential clean-up steps. If the policy was marked for deletion, the deception manager executes a cleanup procedure, i.e., it reverts everything (configuration, artifacts, e.g. "VirtualService" resources, "EnvoyFilter" resources) that were initially deployed for this policy.

A deception policy defines one or more traps. If one or more traps were deleted, the deception manager can clean-up just those resources associated with the deleted traps. Crucially, the deception manager always actively compares the traps currently specified in the deception policy against metadata annotations stored on previously modified service resources, i.e. it can always check what traps are currently configured and what does the deception policy desire. This clean-up includes the removal of any "orphaned" proxy configuration artifacts ("traffic routing/control rules" or "monitoring scripts") that exist in the cluster but are no longer referenced by a deception policy.

Next, each trap definition is validated for structural correctness, including verification that the workload selection criteria are valid and that the chosen "deployment strategies" are compatible with the trap type, e.g., HTTP-based traps cannot be deployed with a file system-based strategy. For each valid trap, the deception manager deploys or updates the traffic routing rules as indicated at 33. In the example embodiment, the deception manager creates a set of traffic routing rules for a service mesh in the cluster as will be further described below. The set of traffic routing rules implements a trap and the trap is created according to the criteria for how to deploy the trap as defined in the deception policy.

For each valid trap, the deception manager also deploys a monitor for the trap. In the example embodiment, the deception manager creates a second set of traffic routing rules at 34 for the service mesh in the cluster as will be further described below, where the second set of traffic routing rules implements the monitor. While deploying a monitor for each trap is included in the example embodiment, it is envisioned that this step may be omitted in other embodiments. In some embodiments it may also be configurable in the deception policy if a monitor should be deployed for a trap. For example, see the statement "captorDeployment:strategy: ..." statement in listing of Appendix A. Setting the "captorDeployment:strategy:" to value "null" may be interpreted to deploy no monitoring at all for the corresponding trap.

Lastly, the deception manager submits the resource definition at 35 to the control plane. It is to be understood that only the relevant steps of the technique are discussed in relation to Figure 3, but that other steps may be implemented by the deception manager in order to control and manage cyber deception in the container orchestration system. Other tasks implemented by the deception manager may include but are not limited to write "status conditions" onto the policy object as well as report whether the policy was found, whether all traps are valid, whether decoys were successfully deployed, and whether monitors were successfully deployed. Potential errors may also be logged, as metadata associated with the policy object itself.

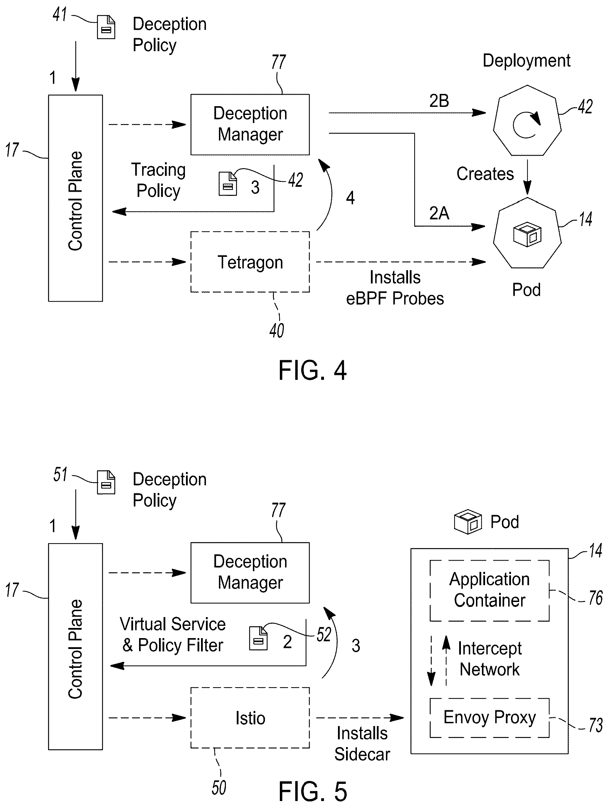

The deception manager can deploy traps with different strategies. With reference to Figure 4, a containerExec strategy deploys file system honeytokens by executing shell commands directly in a container. Commands are executed in the selected containers using the Kubernetes API, sending HTTP POST requests to the API server. First, the deception manager creates the necessary directories in the container, if they do not already exist, using the *mkdir* command. Next, the deception manager creates honeytokens using the echo command, redirecting the output to the desired file. Note that one can use echo instead of *touch* because in the case where the file already includes content and we want to update it to be empty, *touch* would not overwrite it. To avoid command injection vulnerabilities, the operator encodes the file's content in octal format before executing the command in the container. Base64 or hexadecimal encoding is not used because they might not be available in all containers and shells. After creating the file, the deception manager checks that the file was created successfully and that the content is correct using the *cat* command, verifying the output. Finally, if the file is configured to be read-only in the deception policy, the operator sets the file permissions to 444 using the *chmod* command.

For a volumeMount strategy, honeytokens are deployed by mounting a volume to the selected containers on the specified path. The deception manager first creates a *Secret*, which is a Kubernetes object that contains sensitive data, with the content of the honeytoken. The deception manager then configures a volume in the selected deployment with the *Secret* as the source and mounts it to the selected containers within the deployment. Kubernetes will then re-create the pods with the mounted honeytokens because the deployment changed, which serves as a blueprint for creating pods. The deception manager also sets the volume to be read-only, if specified in the policy, to prevent the honeytoken from being modified from within the container.

For HTTP-based traps, a third strategy is deployed, i.e., a decoy strategy. In the example embodiment, the decoy strategy first requires a service mesh (e.g., Istio) to be installed in the cluster as shown in Figure 5. A service mesh enables system operators to centrally monitor and control all cluster traffic. Istio service mesh places a reverse proxy in front of application containers by putting a sidecar container into every pod. The sidecar container intercepts all incoming and outgoing traffic. It is readily understood that other types of service meshes fall within the scope of this disclosure.

For each trap, the deception manager queries the cluster's API for *Service* resources that match the trap's workload selection criteria (e.g., namespace filters and label selectors). Services that are marked for deletion or that were created before the policy was created may be excluded. In some embodiments, a deception policy may include a boolean attribute "up-dateExisting", which may be used to control whether services created before the policy was created should be considered. The deception manager tries to create one VirtualService per target service, regardless of how many traps or policies target that service. This is necessary because deploying multiple VirtualServices per host is not always possible in Istio without undesired side effects.

Different implementations are needed depending on the desired response from the trap. For traps with a fixed HTTP response (httpResponse), the decoy is an Istio VirtualService that intercepts HTTP requests matching a specified URI pattern and returns a static (fake) HTTP response. In this case, the HTTP request never reaches the target application. For traps that require modifying the HTTP response headers (httpHeaderMutation), the decoy is also an Istio VirtualService, but instead of the VirtualService returning a response, the VirtualService forwards the request to the target application. When the target application responds, the VirtualService manipulates the response headers (and optionally the status code) on the return path. For traps that require modifying the body of the HTTP response (httpBodyMutation), the decoy is an Istio EnvoyFilter containing a WebAssembly (WASM) extension; a compiled C++ program that intercepts HTTP responses and applies body transformations using configurable mutation engines. Alternatively, the EnvoyFilter may instead contain Lua code; a scripting language; that implements the same interception capabilities and body transformations. Each of these implementations is further described below.

Figures 4 and 5 also illustrate the versatility of the proposed automated deception placement mechanism provided by the deception manager 77. Both figures show a deception manager 77 interacting with a control plane to receive notifications about new or updated deception policies (Figure 4, 41, deception policy for file based deception measures, Figure 5, 51 deception policy for HTTP traffic based deception measures). It is understood that the same type of deception manager operates in the scenarios described in Figure 4 and Figure 5 but depending on received deception policies the deception manager performs different activities to implement deception measures described by those policies. For file based deceptions (Figure 4), the deception manager creates a tracing policy 42, directed to a tetragon monitoring system 40, which is configured with this tracing policy to monitor and report access to specific files in specific pods or containers. In parallel, the deception manager also monitors deployment activities 42 of pods and containers and in response to a new pod deployment, creates the files for which tetragon monitoring is configured in containers executed by target pods 14. For HTTP traffic based deception scenarios, as shown in Figure 5, the deception manager 77 receives a deception policy describing HTTP traffic based traps, and in response created traffic manipulation configuration data 52 for a service mesh provider, like Istio 50, in form of VirtualService and other traffic filtering configurations. The service mesh provider monitors deployment activities for pods and manipulates the configuration of those pods in a way that a sidecar container (16, not shown here) executing a proxy component 73 that intercepts all traffic from and to the application container 76 is installed in the pod. In case the pod is a targeted by the deception policy (target pod 14), also the traffic manipulation configuration data created by the deception manager 77 is applied to the proxy component 73.

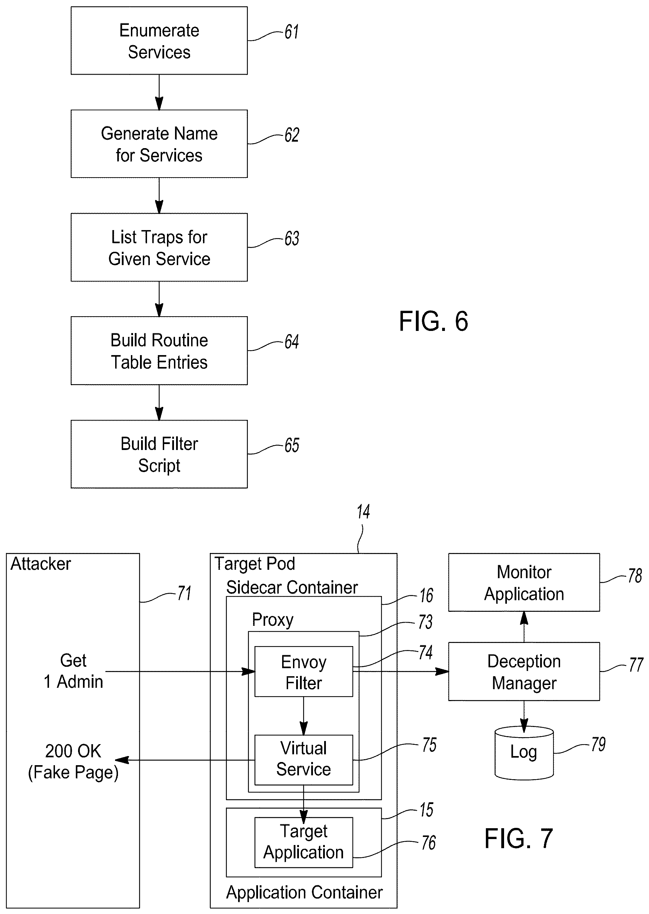

Figure 6 further depicts an example embodiment for how to deploy traps using VirtualServices. First, the deception manager enumerates services implicated by the deception policy as indicated at 61. As noted above, each of the traps in a given deception policy are designated for deployment on one or more services in the container orchestration system. Thus, the deception manager enumerates the services that match the workload criteria for each trap listed in the deception policy.

For each enumerated service, the deception manager generates a name at 62 for Istio resources, such as VirtualService. For example, the name may follow a pattern like koney-vs-<serviceNamespace>-<serviceName>. In this way, the deception manager can identify which service is associated with which VirtualService.

Additionally, the deception manager lists the traps for a matched service at 63. To do so, the deception manager iterates over the traps in the deception policy, and checks whether each trap's match criteria would select the identified service. Traps that require traffic manipulations that are not supported by VirtualServices, like httpBodyMutation traps, are excluded from this search because they need to be implemented differently, e.g., in form of EnvoyFilters with WASM plugins or Lua scripts.

Next, the deception manager builds the traffic routing rules for a service mesh as indicated at 64, where the set of traffic rules implement the traps identified in the deception policy. It is understood that the traffic routing rules may be placed in a certain order, giving them a certain priority in the routing decision. As an example, routing rules that immediately return a static response may be placed before other rules. In the example embodiment, the service mesh is Istio and the traps are implemented using a VirtualService. For illustration purposes, an example is set forth in the appendices below.

An example deception policy is set forth in Appendix A. In this example, the matching rule for the trap matches all HTTP requests starting with "/admin" and optionally ending with another "/" and more data, as well as uses a GET method. The response rule specifies a return code "200" and static content. The deception policy further includes criteria for where to deploy the trap and criteria for how to deploy the trap. In particular, the example trap shall only affect service resources in the namespace "koney-demo" having the label "demo.koney/httpresponse" set to true. As noted above, the criteria for how to deploy the trap specifies "Istio".

The deception manager maps the deception policy to the VirtualService shown in Appendix B. Metadata for the VirtualService includes its name, namespace and owner reference. More specifically, the "request" portion of the deception policy in Appendix A is mapped to the match rule named "direct-response" of the VirtualService, and the "response" portion of the policy is mapped to the "http: -directResponse" portion of the VirtualService. In addition to the routing rule for the trap, the VirtualService specifies a routing rule to pass through any traffic that did not match the matching rule to the target application, see match rule named "backend-service-port-8080".

Similarly, the deception manager builds a filter script at 65 for monitoring the trap, where the filter script implements a monitor for the trap. In the example embodiment, the service mesh remains Istio and filter scripts are implemented using a Lua script via an EnvoyFilter. With continued reference to the deception policy in Appendix A, the resulting filter script created by the deception manager is shown in Appendix C.

In this example, the filter script is a template that is filled in by the deception manager. Three areas of the template which require input include the name of the policy, the matching criteria for HTTP requests and an address for where to send alert notifications. To ensure reporting is accurate, it is important that the matching criteria for the monitor be the same as the matching criteria for the trap. To do so, the deception manager retrieves the matching criteria from the deception policy and applies it to the template. The remainder of the script may be predefined. More specifically and by example, the conditions of the "if" statement of the script below the comment "-Check if path matches trap pattern:" may be generated by the deception manager according to the "request" portion of the deception policy, this ensures that trap and monitor identify the same HTTP requests. It is noteworthy that the "matchUri" pattern provided by the deception policy differs from the corresponding conditions in the traffic filtering "if" statement of the Lua script. Those conditions are 'path =="/admin" or string.match(path,"^/admin/")". The reason for this is differences in the regex support between Lua and the deception policy notations. However, there are automated mappings available from almost all possible regex statements in the deception policy notation to corresponding Lua statements. An error may be thrown, or manual intervention may be requested if no such automated mapping is available. Also, the value for variable "cluster" and the value for the Json alert_body object attributes "policy" and "trap_path" are set to corresponding values from the deception policy during creation of the EnvoyFilter. Those values may be injected into the script template using pattern matching and pattern replacement techniques. The filter script is then injected into a proxy via the EnvoyFilter.

Listing 5 above provides another example of a deception policy. In this example, the deception policy includes a content manipulation rule that is applied to the body of an HTTP response created by the target application. The resulting filter script created by the deception manager is shown in Appendix D. While reference is made to Lua scripting language, other types of scripting languages are contemplated by this disclosure.

Figure 7 further illustrates the cyber deception mechanism described above. In the example, an attacker 71 send a HTTP request to a target application 76. The target application 76 resides in an application container 15 on a pod 14 of the container orchestration system. A proxy 73 also resides in a sidecar container 16 on the pod 14. In this example, the proxy 73 has been configured by a deception manager 77 to implement a trap. More specifically, the trap is implemented by an EnvoyFilter 74 and a VirtualService 75. While the EnvoyFilter is shown as preceding the VirtualService 75, it is understood that this arrangement is not limiting and the order may be reversed, as long as both EnvoyFilter and VirtualService receive all incoming traffic. It is noteworthy that placement of the sidecar container 16, configuring the proxy component 73 to execute in the sidecar container and configuration of the proxy container as an intermediate node between the target application and all its clients is performed by a service mesh, e.g., according to configuration provided by a vendor of the target application. The deception manager 77 alters this configuration in a way that the service mesh in addition applies the EnvoyFilter and the VirtualService to the configuration of the proxy component.

Continuing with the example set forth in the appendices, the HTTP request uses a GET method request from a URL having /admin in this path. The EnvoyFilter is configured to receive the HTTP request. Because the HTTP request matches the matching criteria, the EnvoyFilter sends a notification regarding the HTTP request to the deception manager. The notification may include (but is not limited to) the name of the deception policy, metadata for the trap, the HTTP request path, HTTP method, a timestamp and other available contextual information about the attacker making the request.

In one embodiment and in response to receiving the notification, the deception manager 77 extracts the metadata from the notification and logs the metadata in a data store 79. In other embodiments and in response to receiving the notification, the deception manager 77 reads a log maintained by the service mesh and logs an event pertaining to the trap in the data store 79. Alternatively or additionally, the deception manager 77 may send an alert regarding the attack to an application performance monitoring tool 78, such as Dynatrace APM platform.

The VirtualService 75 is also configured to receive the HTTP request. Depending on the trap configuration and if the HTTP request matches the matching criteria, the VirtualService responds to the attacker 71 with a predefined response. In other scenarios, the HTTP request is passed on to the target application 76 which in turn formulates a response. The response in turn passed back through the proxy before being sent to the attacker. In this way, the VirtualService can modify the response before it is sent to the attacker.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

### Appendix A

```
apiVersion: research.dynatrace.com/v1alpha1
 kind: DeceptionPolicy
 metadata:
 name: http-static-response-fake-admin-endpoint
 spec:
 traps:
 - httpResponse:
   request:
    matchUri: "^/admin(/.*)?$"
    method: GET
   response:
    status: 200
    headers:
     Content-Type: "text/html"
    body: |
    <!DOCTYPE html>
    <html>
     <head><title>Login | Admin Panel</title></head>
     <body>
      <div class="login-box">
      <h1>Administrator Access</h1>
      <form action="/admin/login" method="POST">
       <input type="text" name="user" placeholder="Username" /><br /><br />
       <input type="password" name="password" placeholder="Password" /><br /><br />
       <button type="submit">Login</button>
      </form>
      </div>
     </body>
    </html>
   gateways:
     - mesh
   match:
   any:
    - resources:
     namespaces:
      - "koney-demo"
     selector:
      matchLabels:
      demo.koney/httpresponse: "true"
  decoyDeployment:
   strategy: istio
  captorDeployment:
   strategy: istio
```

### Appendix B

```
 apiVersion: networking.istio.io/v1
 kind: VirtualService
 metadata:
 creationTimestamp: "2026-03-09T18:06:32Z"
 generation: 1
 labels:
 koney/deception-policy: http-static-response-fake-admin-endpoint
 name: koney-vs-koney-demo-koney-demo-svc-e7b29483eb82ee7d515c8
 namespace: koney-demo
 ownerReferences:
 - apiVersion: research.dynatrace.com/v1alpha1
 blockOwnerDeletion: true
 controller: true
 kind: DeceptionPolicy
 name: http-static-response-fake-admin-endpoint
 uid: 0f33407e-49d9-47e7-8a13-bd058675dfe9
 resourceVersion: "192371"
 uid: a45d1692-6cbc-42cc-9636-fbcf4a8ba42b
 spec:
 gateways:
 - mesh
 hosts:
 - koney-demo-svc.koney-demo.svc.cluster.local
 http:
 - directResponse:
  body:
  string: |
   <!DOCTYPE html>
   <html>
    <head><title>Login | Admin Panel</title></head>
    <body>
    <div class="login-box">
     <h1>Administrator Access</h1>
     <form action="/admin/login" method="POST">
      <input type="text" name="user" placeholder="Username" /><br /><br />
      <input type="password" name="password" placeholder="Password" /><br /><br />
      <button type="submit">Login</button>
     </form>
    </div>
    </body>
   </html>
  status: 200
 headers:
  response:
  set:
   Content-Type: text/html
 match:
 - method:
  exact: GET
  uri:
   regex: ^/admin(/.*)?$
 name: direct-response
 - match:
 - port: 8080
 name: backend-service-port-8080
 route:
 - destination:
   host: koney-demo-svc
   port:
   number: 8080
```

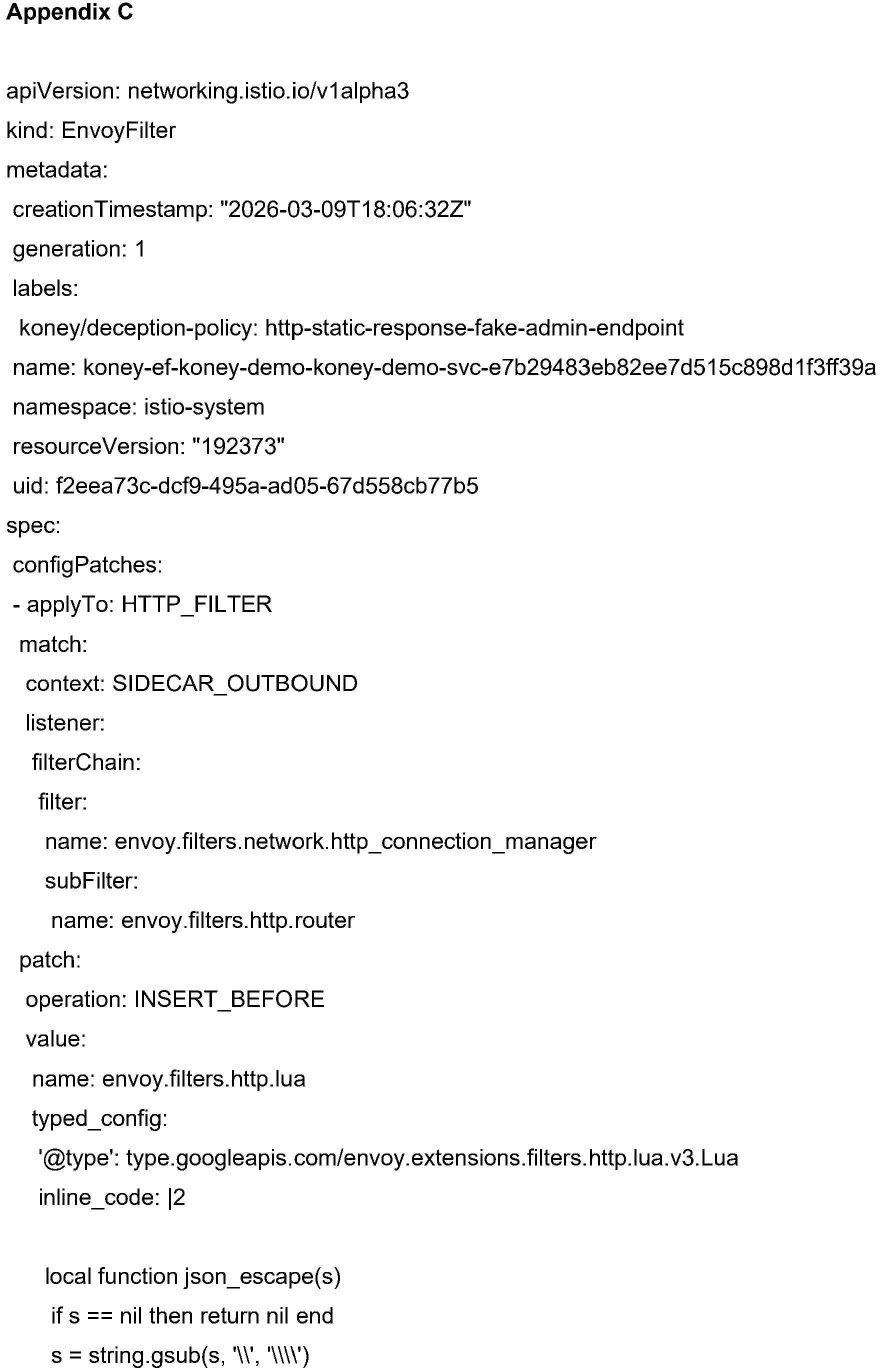

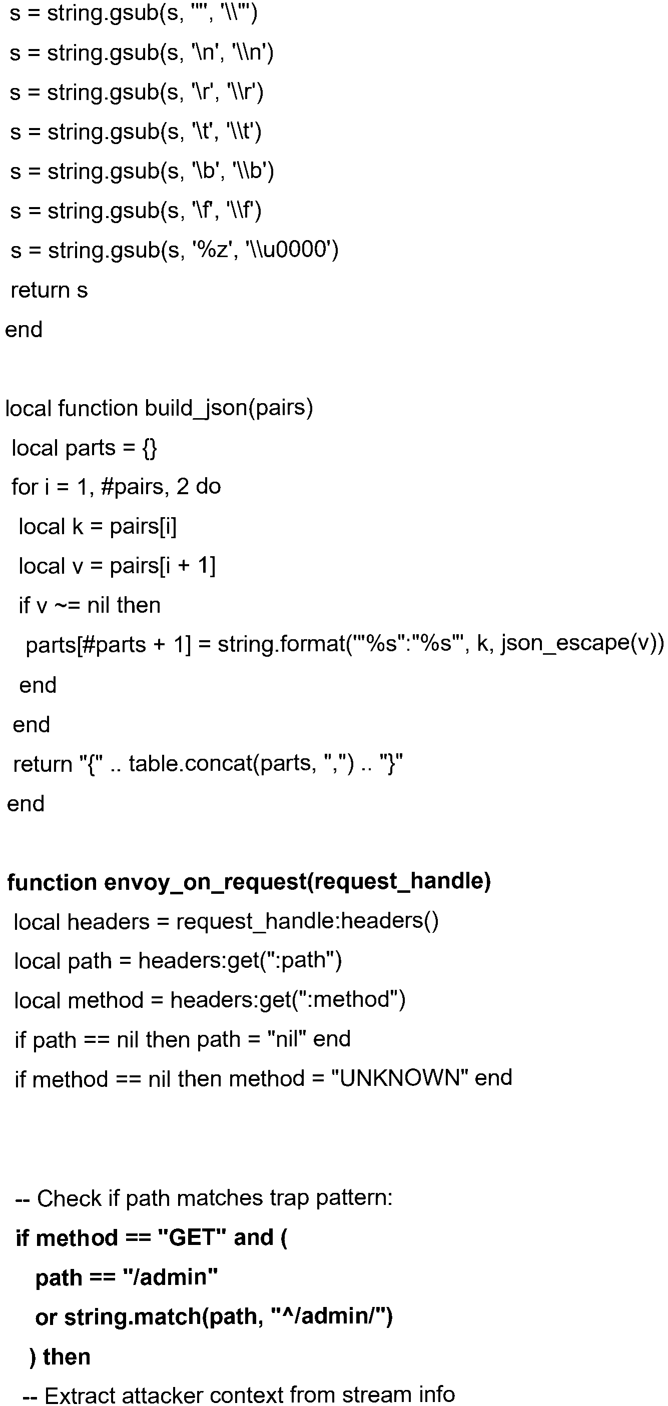

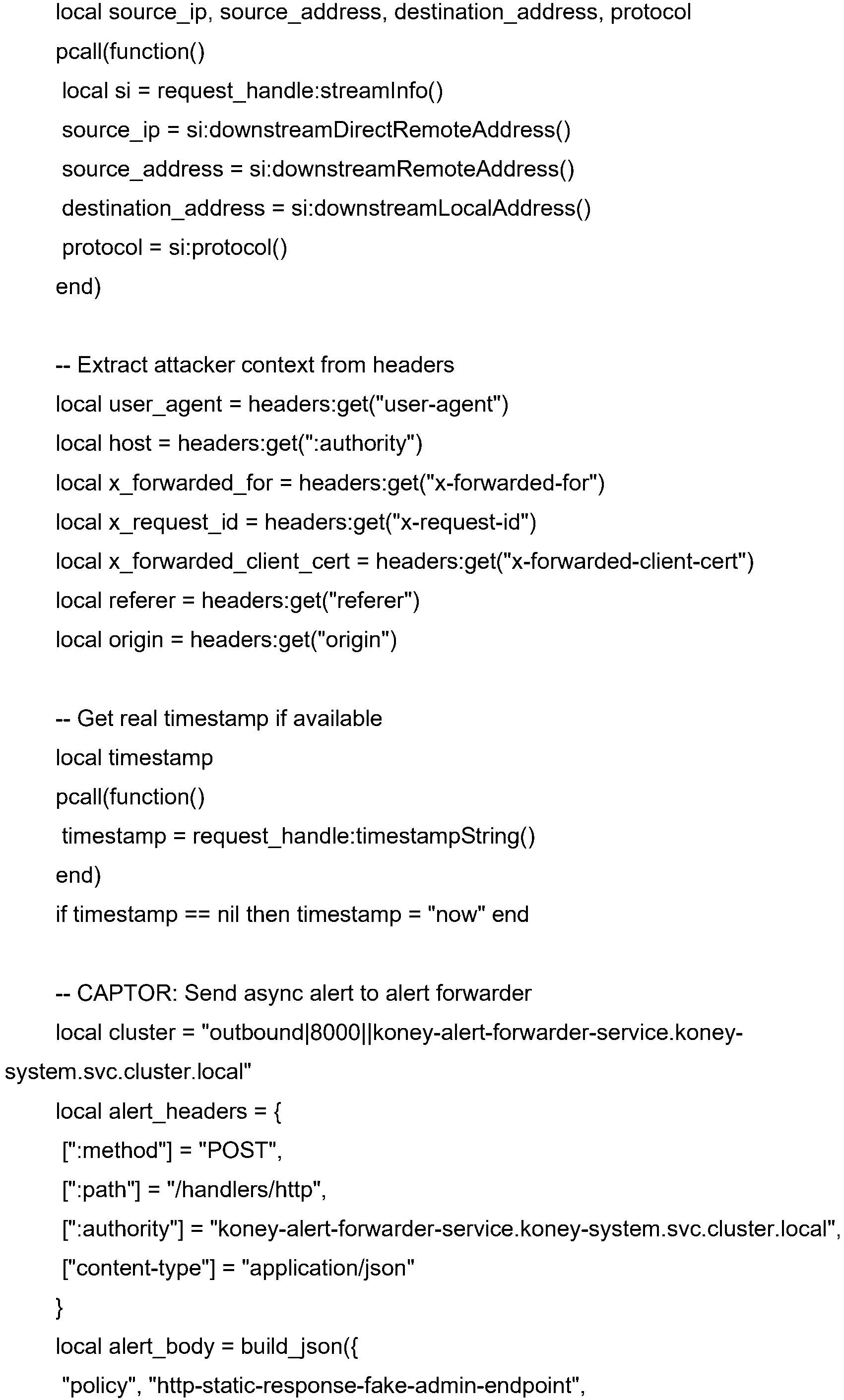

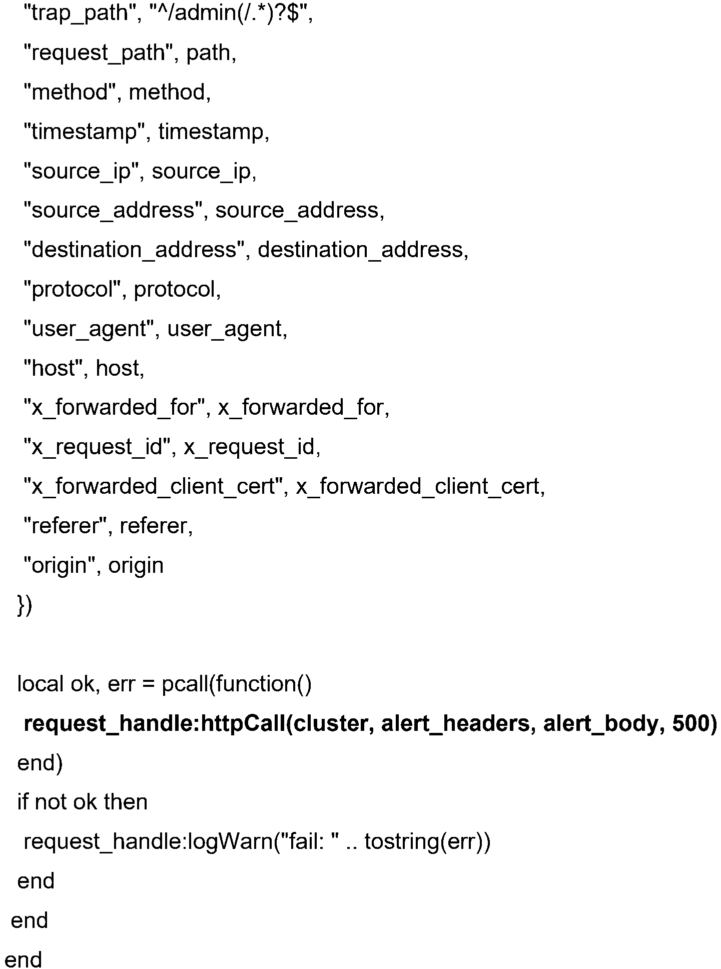

### Appendix D

```
 apiVersion: networking.istio.io/v1alpha3
 kind: EnvoyFilter
 metadata:
 name: koney-ef-body-mutation-script-injection
 namespace: istio-system
 labels:
 koney/deception-policy: http-body-mutation-script-injection
 spec:
 configPatches:
 - applyTo: HTTP_FILTER
 match:
  context: SIDECAR_OUTBOUND
  listener:
  filterChain:
   filter:
    name: envoy.filters.network.http_connection_manager
    subFilter:
    name: envoy.filters.http.router
 patch:
  operation: INSERT_BEFORE
  value:
   name: envoy.filters.http.lua
  typed_config:
   '@type':
   type.googleapis.com/envoy.extensions.filters.http.lua.v3.Lua
   inline_code: |2
    -- Configuration: trap specification
    -- request.match: "*" (all paths)
    -- request.method: GET
    -- response.matchHeaders: Content-Type: text/html
    -- bodyMutations:
    -- engine: regex
    -- match: "(<head>)(.*)(</head>)"
    -- replace: "$1$2<script></script>$3"
    local request_method = nil
    function envoy_on_request(request_handle)
    local headers = request_handle:headers()
    request_method = headers:get(":method")
    end
    function envoy_on_response(response_handle)
     -- Check if the request method matches (GET only)
     if request_method ~= "GET" then
      return
     end
    -- Check response Content-Type header
    local headers = response_handle:headers()
    local content_type = headers:get("content-type")
    if content_type == nil then
     return
    end
    if not string.match(content_type, "^text/html") then
     return
    end
    -- Buffer the entire response body
    local body = response_handle:body()
    if body == nil then
     return
    end
    local body_str = body:getBytes(0, body:length())
    if body_str == nil or body_str == "" then
     return
    end
    -- Apply regex engine: inject <script></script> before </head>
    -- Lua pattern: (<head>)(.-)(</head>)
    -- %1 = <head>, %2 = inner content, %3 = </head>
    local new_body, n = string.gsub(body_str,
     "(<head>)(.-)(</head>)",
     "%1%2<script></script>%3"
    )
    if n == 0 then
     return
    end
    -- Replace body and update Content-Length
    body:setBytes(0, body:length(), new_body)
    headers:replace("content-length", tostring(#new_body))
    end
```

## Claims

1. A computer-implemented method for implementing cyber deception in a container orchestration system, comprising:
- installing a deception manager on a cluster of a container orchestration system;
- receiving, by the deception manager, a deception policy, where the deception policy identifies at least one trap, specifies a match rule for HTTP requests, specifies a response rule for responding to matched HTTP requests, specifies criteria for where to deploy the at least one trap, and specifies criteria for how to deploy the at least one trap; and
- creating, by the deception manager, a set of traffic routing rules for a service mesh in the cluster, where the set of traffic routing rules implements the at least one trap and is created according to the criteria for how to deploy the at least one trap defined in the deception policy.

2. The method of claim 1, wherein the match rule in the deception policy specifies a particular endpoint defined in accordance with Hypertext Transfer Protocol (HTTP).

3. The method of claim 1 or 2, wherein the match rules in the deception policy specifies a pattern for selecting one or more HTTP requests.

4. The method of any one of the preceding claims, wherein the response rule in the deception policy defines how to provide HTTP responses for HTTP requests and is applied in response to a HTTP request matching the match rule.

5. The method of claim 4, wherein the response rule specifies static content.

6. The method of claim 4 or 5, wherein the response rule defines a response match rule for HTTP responses and a response header manipulation rule specifies how to change header of a given HTTP response, where the given HTTP response matches the response match rule.

7. The method of any one of claims 4 to 6, wherein the response rule defines a response match rule for HTTP responses and a response content manipulation rule specifies how to change content of a given HTTP response, where the given HTTP response matches the response match rule.

8. The method of any one of the preceding claims, wherein the criteria for where to deploy the at least one trap includes at least one of resource type, resource name, resource namespaces, resource labels, resource annotations, container names, and container ports.

9. The method of claim 8, wherein the criteria for where to deploy the at least one trap identifies a first set of application services.

10. The method of any one of the preceding claims, wherein the deception policy further defines criteria for how to deploy a monitor for the at least one trap and the deception manager creates a second set of traffic routing rules for the service mesh in the cluster, where the second set of traffic routing rules implements the monitor.

11. The method of claim 10, wherein the monitor is further defined as a filter having a match rule for HTTP requests and a notifier that sends a notification regarding the at least one trap to the deception manager in response to a given HTTP request matching the match rule.

12. The method of any one of the preceding claims, wherein the container orchestration system is further defined as Kubernetes container orchestration system and the deception manager is defined as an operator for control plane of the Kubernetes container orchestration system.

13. The method of any one of the preceding claims, wherein, in response to receiving a request from a component that is part of the service mesh regarding the at least one trap, the deception manager extracts metadata about the at least one trap from the request and logs the metadata in a data store.

14. The method of any one of the preceding claims, wherein, in response to receiving a request from a component that is part of the service mesh regarding the at least one trap, the deception manager reads a log maintained by the service mesh and logs an event accessing the at least one trap in a data store.

15. A data processing system comprising means for carrying out the method of any one of the preceding claims.
